# EUROPEAN PATENT SPECIFICATION

(11) **EP 4 117 982 B1**
(45) Date of publication and mention of the grant of the patent: **27.05.2026**
(21) Application number: 20710895.2
(22) Date of filing: 10.03.2020
(51) Int. Cl.: B62D 15/02, B62D 13/06

(54) **A METHOD FOR GUIDING A VEHICLE**
VERFAHREN ZUR FÜHRUNG EINES FAHRZEUGS
PROCÉDÉ POUR GUIDER UN VÉHICULE

(43) Date of publication of application: 18.01.2023
(73) Proprietor: VOLVO TRUCK CORPORATION, 405 08 Göteborg (SE)
(72) Inventor: PERSSON, Daniel, 413 21 Göteborg (SE)
(74) Representative: Kransell & Wennborg KB
(86) International application number: PCT/EP2020/056366
(87) International publication number: WO 2021/180312

(56) References cited:
- EP-A1- 3 284 650
- EP-A1- 3 344 519
- DE-A1- 102013 015 348
- DE-A1- 102013 201 799
- US-A1- 2006 020 389
- HUI FANG ET AL: "Ground Texture Matching based Global Localization for Intelligent Vehicles in Urban Environment", INTELLIGENT VEHICLES SYMPOSIUM, 2007 IEEE, IEEE, PI, 1 June 2007 (2007-06-01), pages 105 - 110, XP031126929, ISBN: 978-1-4244-1067-5

## Description

### TECHNICAL FIELD

The invention relates to a method for guiding a subject vehicle along a travelling path. The invention further relates to a control unit for guiding a subject vehicle along a travelling path, to a vehicle, to a computer program and/or to a computer readable medium carrying a computer program.

The invention can be applied in heavy-duty vehicles, such as trucks, buses and construction equipment. Although the invention will be described with respect to a heavy-duty articulated vehicle combination, the invention is not restricted to this particular vehicle, but may also be used in other vehicles such as passenger cars, wheel loaders, excavators and backhoe loaders.

### BACKGROUND

Driver assistance systems are frequently used in modern vehicles, including trucks, for assisting the driver in performing certain driving manoeuvres. For example, it is well known to use cruise control systems, lane keeping assistance systems and also driving assistance systems for reversing.

For trucks, and especially for truck and trailer combinations, reversing may be a challenging task for the driver. To this end, it is for example known to support a driver during reversing by use of e.g. rearward projecting cameras. The driver can by use of the camera frame be supported when reversing and steering the vehicle along a travelling path.

As another example, it is also known to provide more advanced systems where the driver does not need to e.g. steer the vehicle during reversing. Such systems may make use of GNSS (global navigation satellite system) positioning data as input for reversing the vehicle along a travelling path.

However, it has been found that in certain circumstances GNSS positioning data cannot be used since there are areas where there is radio shadow. For example, in terminal areas and/or on forest roads, the vehicle may not be able to reliably receive GNSS positioning data. Moreover, in some situations, there are no vehicle side sensor visual cues, and thus side sensors cannot be used. In especially difficult situations, such as with surrounding high buildings without visual cues, neither GNSS nor side sensors can be used.

EP 3 284 650 A1 relates to a method for automatically parking a motor vehicle with a trailer into a parking space using a driver assistance device of the motor vehicle. For example, it is disclosed to use a learning mode, where reference data about an area surrounding the parking space is recorded and stored by a sensor device of the driver assistance device during parking.

DE 10 2013 015348 A1 shows the features of the preamble of claim 1 and relates to a method for driving a vehicle into a parking space in a parking zone. For example, recorded environment data is used for performing automated parking.

Therefore, in view of the above, there is a strive to develop more advanced methods for guiding a vehicle.

### SUMMARY

An object of the invention is to provide an improved method for guiding a subject vehicle along a travelling path, an improved control unit for guiding a subject vehicle along a travelling path, a vehicle, a computer program and/or a computer readable medium carrying a computer program.

According to a first aspect of the invention, the object is achieved by a method according to claim 1. According to a second aspect of the invention, the object is achieved by a control unit according to claim 7. According to a third aspect, the object is achieved by a vehicle according to claim 8. According to a fourth aspect, the object is achieved by a computer program according to claim 12. According to a fifth aspect, the object is achieved by a computer readable medium carrying a computer program according to claim 13.

According to the first aspect, the object is achieved by a method for guiding a subject vehicle along a travelling path. The method comprises:
obtaining recorded surface pattern information associated with the travelling path,
obtaining current surface pattern information while the subject vehicle is travelling along the travelling path;
identifying matching patterns by comparing the current surface pattern information with the recorded surface pattern information;
determining a translational and/or a rotational deviation between the current surface pattern information and the recorded surface pattern information by use of the identified matching patterns; and
guiding the subject vehicle along the travelling path by use of the determined deviation.

By the provision of the method as disclosed herein, an improved guiding of the vehicle is achieved in which the vehicle may be efficiently guided without e.g. the use of GNSS positioning data. It has been realized that the surface on which the vehicle is travelling may be used for guiding the vehicle along the travelling path. More specifically, the surface pattern can be used for identifying the vehicle's location and/or orientation. This can be done by comparing a current surface pattern which is obtained by the vehicle with a recorded surface pattern. Therefore, instead of relying on information which is obtained from e.g. a satellite, the surface pattern underneath the vehicle can be used.

A surface pattern may be defined as any surface pattern which is recognizable by a sensor, such as on-road and off-road surface patterns, including but not limited to different characteristics of the surface, such as anyone or a combination of surface finish/topography/texture, lateral irregularities and visual contrast information. For example, it has been realized, which also will be further described in the below, that asphalt patterns may be advantageously used for the guiding. Colors and tracks left by the vehicle itself may also be used.

Optionally, guiding the subject vehicle along the travelling path may further comprise adjusting a yaw angle of the subject vehicle in response to the determined deviation. Thereby, the method may automatically steer the subject vehicle along the travelling path. The yaw angle may be adjusted by steering ground engaging means of the vehicle, such as wheels and/or crawler members of the vehicle. Still optionally, guiding the subject vehicle along the travelling path may alternatively or additionally comprise providing a guiding instruction to a user of the vehicle. Purely by way of example, the guiding instruction may be a visual, audio and/or tactile/haptic instruction to the user, for example to a driver of the vehicle. A visual instruction may for example be an instruction provided on a display, in the form of an arrow, line or the like which may be indicative of a direction of the travelling path.

Optionally, guiding the subject vehicle along the travelling path may comprise adjusting the yaw angle of the subject vehicle in response to the determined deviation and in response to a current ground engagement member angle of the subject vehicle, such as a current road-wheel angle of the subject vehicle. Thereby more rapid control functionality may be provided so that the subject vehicle can efficiently follow the travelling path.

Optionally, obtaining recorded surface pattern information may comprise recording surface pattern information while driving the subject vehicle in a recording direction along the travelling path, such as in a forward direction. The recording direction may hence be any direction, forward or reverse. Preferably, the recording direction is an opposite direction to a current direction of travel when the vehicle is guided along the travelling path.

Optionally, the method may further comprise defining the travelling path by use of the recorded surface pattern information which was recorded while driving the subject vehicle in the recording direction along the travelling path. For example, the recording direction may be a forward direction of the vehicle when the vehicle e.g. drives into a forest road or when the vehicle drives in a terminal area (e.g. a logistics center). Thereby, by defining the travelling path during e.g. forward driving, the vehicle can be efficiently guided back in reverse along the same travelling path, i.e in the opposite direction. As such, it can be ensured that the vehicle follows the same path. This may mitigate or eliminate the risk of collisions, driving outside the road and getting stuck etc.

Optionally, the recorded surface pattern information may comprise a plurality of subsequent surface pattern images, and wherein defining the travelling path is performed by:
identifying matching patterns which are overlapping in at least two images of the plurality of subsequent surface pattern images; and
determining a relative translational and/or a rotational change of the at least two images by use of the identified matching patterns which are overlapping in the at least two images.

Thereby the travelling path may be efficiently defined without e.g. the need of a GNSS navigation system, map information, side sensor information, or by any other external information. Compared to standard sensors on the vehicle walls, other benefits of horizontal surface monitoring underneath the vehicle are the possibilities to shield the sensors from rain/snow/sun glare under the vehicle, and to be able to illuminate the sensed surface from many directions without disturbing surrounding vehicles.

Optionally, the recorded surface pattern information may at least partly be surface pattern information of an area on which the subject vehicle is intended to travel, such as a terminal area. Still optionally the recorded surface pattern information may be recorded by any one of the subject vehicle and any other vehicle which has been travelling in the area. Hence, the recorded surface pattern information may be obtained only by the subject vehicle, by other vehicles or by a combination of the subject vehicle and at least one other vehicle.

Optionally, identifying matching patterns by comparing the current surface pattern information with the recorded surface pattern information may be performed by identifying an overlapping image portion of at least one surface pattern image of the recorded surface pattern information and a current surface pattern image of the current surface pattern information. Thereby, by identifying the overlapping image portion, a translation (positional deviation) and a rotational deviation between the two images can be obtained.

According to the invention, the subject vehicle is an articulated vehicle combination comprising at least two connected vehicle bodies which are arranged to be articulated with respect to each other, wherein the method is performed for at least two of the vehicle bodies. It has been found that the present method is especially advantageous for articulated vehicle combinations since by applying the method for at least two vehicle bodies, an articulation angle therebetween can be obtained. Thereby, the method further comprises determining an articulation angle between the at least two vehicle bodies by use of the determined rotational deviations, and optionally also by use or the determined translational deviations, of each vehicle body of the at least two vehicle bodies. The determined articulation angle may be used as input for guiding the vehicle. The articulation angle may be a very important input for guiding an articulated vehicle combination during reversing.

Optionally, the method may further comprise combining the recorded surface pattern information to create a surface pattern map of an area, wherein the recorded surface pattern information may be recorded by more than one vehicle which has been travelling in the area. Hence, as mentioned in the above, the recorded surface pattern information may be recorded by the subject vehicle, by other vehicles or by a combination of the subject vehicle and any other vehicle. Still optionally, the method may further comprise selecting the travelling path from any one of previous travelling paths which were recorded by any one of the more than one vehicle. Thereby a most suitable travelling path for the subject vehicle may be chosen, depending on the circumstances. For example, a suitable travelling path may be a travelling path leading to a specific terminal loading location for the subject vehicle. Still further, by creating a surface pattern map of an area, the subject vehicle may by use of the surface pattern map be able to move to any location in the area, such as finding a starting position of any defined travelling path. The starting position may be provided anywhere along the defined travelling path.

According to the second aspect, the object is achieved by a control unit for guiding a subject vehicle along a travelling path, wherein the subject vehicle comprises at least one sensor for monitoring surface patterns, and wherein the control unit is configured to perform the method according to any one of the embodiments of the first aspect of the invention.

Advantages and effects of the second aspect of the invention are largely analogous to the advantages and effects of the first aspect of the invention. It shall also be noted that all embodiments of the first aspect of the invention are applicable to all embodiments of the second aspect of the invention and vice versa.

The control unit may include a microprocessor, microcontroller, programmable digital signal processor or another programmable device. The primary control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device. The control unit may comprise embedded hardware, sometimes with integrated software, where the hardware show close physical relationship. Examples of physical relationships are: shared casing and components mounted on one or several circuit boards. It shall also be noted that the control unit may be a combination of several communicatively connected control units.

According to the third aspect, the object is achieved by a vehicle comprising at least one sensor for monitoring surface patterns, wherein the vehicle further comprises the control unit according to any one of the embodiments of the second aspect of the invention.

Advantages and effects of the third aspect of the invention are largely analogous to the advantages and effects of the first and second aspects of the invention. It shall also be noted that all embodiments of the first and second aspects of the invention are applicable to all embodiments of the third aspect of the invention and vice versa.

Optionally, the at least one sensor may be positioned to monitor surface patterns of a surface underneath the vehicle. It has been realized that positioning the at least one sensor like this may efficiently protect the at least one sensor and/or provide more accurate sensor data with less noise. Compared to standard sensors on the vehicle walls, the horizontal surface monitoring opens up possibilities to shield the sensors from rain/snow/sun glare under the vehicle.

Still optionally, the vehicle may further comprise lighting means for illuminating the surface underneath the vehicle. As such, the surface patterns may be more easy to recognize by the at least one sensor. Further, the surface pattern information may also be more easily recognized during dark conditions and/or during bad weather conditions. Still further, the lighting means may support the at least one sensor in recognizing more complex and detailed surface patterns, such as asphalt patterns or the like. Still optionally, the lighting of darker surface areas to the same degree as nearby sun/street-light-lit surface areas may allow a camera sensor to reduce shutter time, or sensor sampling time, to retrieve a uniformly lit image. Without the vehicle lighting means, such as vehicle surface lamps, the same surface areas would not be possible to capture in one camera frame, since the lighting range would be too big.

Optionally, the at least one sensor may be configured to monitor at least one of an asphalt pattern, a gravel pattern, a stone pattern, a height pattern, a clay pattern, a pattern created by the vehicle's own wheels, a natural ground color pattern, a color pattern such as a painted terminal pattern, or the like.

Optionally, the at least one sensor may be any one of a LIDAR (light detection and ranging), a RADAR (radio detection and ranging), a camera such as a high resolution camera, time-of-flight camera, or SONAR (sound navigation ranging). A high resolution camera may be defined as a camera with at least two million pixels, such as 3, 4, 5, 10 million pixels or more.

Optionally, the vehicle may be an articulated vehicle combination comprising at least two connected vehicle bodies which are arranged to be articulated with respect to each other.

Optionally, the vehicle may be an autonomous vehicle or a semi-autonomous vehicle. Hence, the control unit may at least automatically steer the subject vehicle along the travelling path. The control unit may also be configured to provide throttle and/or braking commands for the subject vehicle. The method according to the present invention may be part of a driver assistance system where for example reversing of the subject vehicle is at least party automatically performed by the control unit in that it issues control signals to a steering system of the vehicle, a propulsion system and/or to a braking system of the subject vehicle.

According to the fourth aspect, the object is achieved by a computer program comprising program code means for performing the steps of any of the embodiments of the first aspect, when said program is run on a computer. The computer program is preferably run on the control unit according to the second aspect of the invention.

Advantages and effects of the fourth aspect of the invention are largely analogous to the advantages and effects of the first, second and third aspects of the invention. It shall also be noted that all embodiments of the first, second and third aspects of the invention are applicable to all embodiments of the fourth aspect of the invention and vice versa.

According to the fifth aspect, the object is achieved by a computer readable medium carrying a computer program comprising program code means for performing the steps of any of the embodiments of the first aspect, when said program product is run on a computer. The computer program is preferably run on the control unit according to the second aspect of the invention.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is side view of a vehicle according to an example embodiment of the present invention;
Fig. 2 is a schematic view of two images comprising surface pattern information according to an example embodiment of the present invention;
Fig. 3 is a schematic view of surface pattern information and a travelling path according to an example embodiment of the present invention;
Fig. 4 is a schematic view of surface pattern information from two vehicle bodies used to determine an articulation angle according to an example embodiment of the present invention; and
Fig. 5 is a flowchart of a method according to an example embodiment of the present invention.

### DETAILED DESCRIPTION OF EXAMPLE EMBODIMENTS OF THE INVENTION

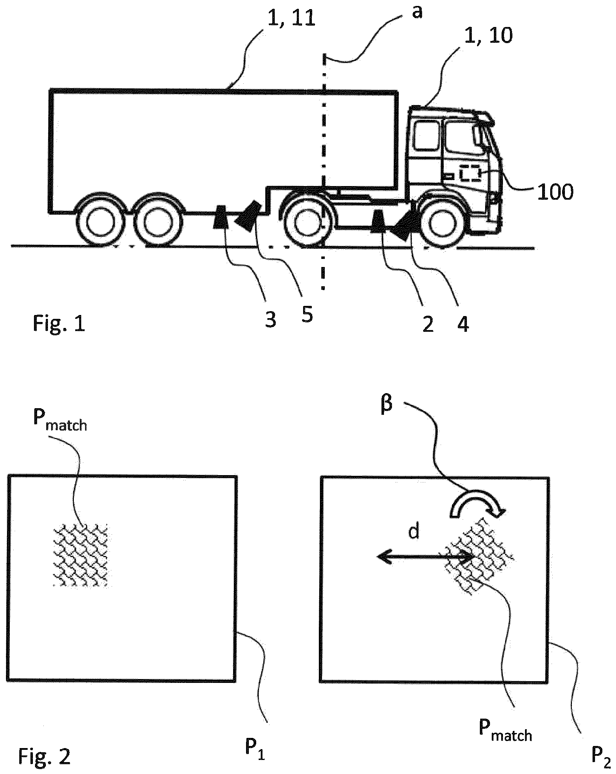

In fig. 1, a side view of a subject vehicle 1 in the form of a heavy-duty truck 10 and trailer 11 combination is shown. Hence, fig. 1 shows an example of an articulated vehicle combination 1 comprising two connected vehicle bodies which are arranged to be articulated with respect to each other. In the shown embodiment, the two vehicle bodies 10, 11 are arranged to be articulated about an articulation axis a. The articulation axis is provided vertically, as seen when the articulated vehicle combination 1 is provided on a flat horizontally extending surface.

It shall be noted that even though a truck 10 and trailer 11 combination is shown, the present invention is not limited to only this type of vehicle, but may also be used for other vehicles and vehicle combinations, such as other trucks, buses and construction equipment. Further, the present invention may also be advantageously implemented for vehicles comprising more than one articulation joint, such as for a heavy-duty truck and trailer combinations known as a Nordic combination. A Nordic combination comprises a truck connected to at least one trailer via a dolly. Hence, the Nordic combination comprises at least two articulation joints. A vehicle having more than one articulation joint may be difficult to reverse in certain circumstances, such as in narrow areas, including but not limited to forest roads, terminal areas etc. Therefore the Nordic combination, or any other multi-articulation angle vehicle combination, would benefit from using the method as disclosed herein.

The truck 10 comprises a sensor 2 for monitoring surface patterns. Similarly, the trailer 11 also comprises a sensor 3 for monitoring surface patterns. In the shown embodiment, the truck further comprises a control unit 100. The control unit 100 is configured to obtain surface pattern information from the sensors 2, 3.

Both sensors 2, 3 are positioned to monitor surface patterns of a surface underneath the vehicle 1. Still further, the truck 10 comprises lighting means 4 for illuminating the surface underneath the truck 10 in the proximity of the sensor's 2 obtaining area. The lighting means may be any kind of lamp, such as an LED lamp or the like, which illuminates the surface underneath the truck 10 in order to improve the sensor information obtained by the sensor 2. In a similar manner, also the trailer 11 comprises lighting means 5 for illuminating the surface underneath the trailer 11 in the proximity of the sensor's 3 obtaining area

Each sensor 2, 3 is configured to monitor at least one of an asphalt pattern, a gravel pattern, a stone pattern, a height pattern, a clay pattern, a pattern created by the vehicle's own wheels, a natural ground color pattern, a color pattern, such as a painted terminal pattern, or the like. For example, each sensor 2, 3 may be configured to monitor a grain pattern of an asphalt surface and/or a grain pattern of a gravel/mud surface.

Each sensor 2, 3 may be any one of a LIDAR, a RADAR and a camera as mentioned in the above.

Fig. 2 shows a general principle of the present invention. It shows a schematic view of two images P₁, P₂ comprising surface pattern information. The images P₁, P₂ may be provided by sensor information from one of the sensors 2, 3 as shown in fig. 1. Two images P₁ and P₂ are shown comprising surface pattern information P_{match}. The images P₁, P₂ are two subsequent images which have been obtained while the vehicle 1 has been moving in a forward or rearward direction. The images P₁, P₂ comprise an overlapping image portion comprising the same pattern P_{match}. Thereby, in the two images P₁, P₂ a matching pattern P_{match} **can** be identified by comparing the surface pattern information in the image P₁ with the surface pattern information in the image P₂. By use of the matching pattern P_{match} in the two images P₁, P₂, a translational d and/or a rotational deviation β between the two images P₁, P₂ can be determined. As such, a translational d and a rotational change β of the vehicle 1 can be determined when the vehicle 1 moves along a travelling path R. The rotational deviation β may be indicative of an angular deviation. In the shown embodiment, the angular deviation β is approximately 45 degrees.

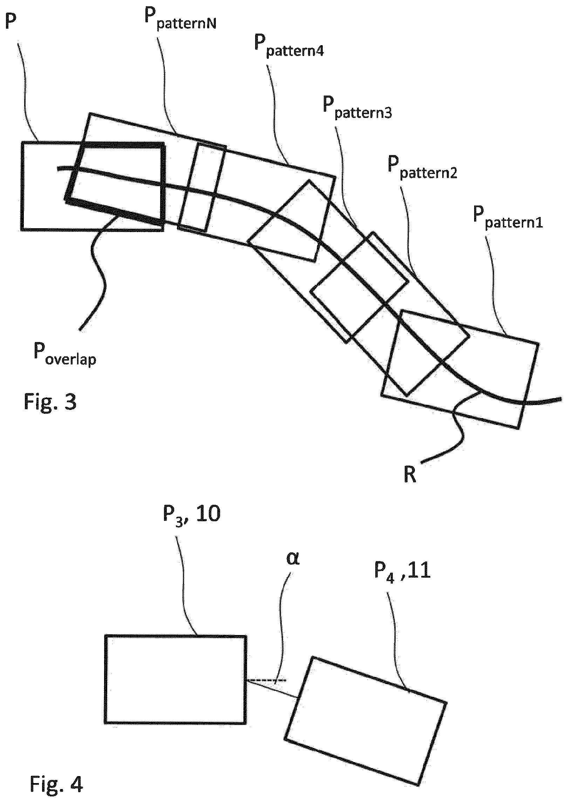

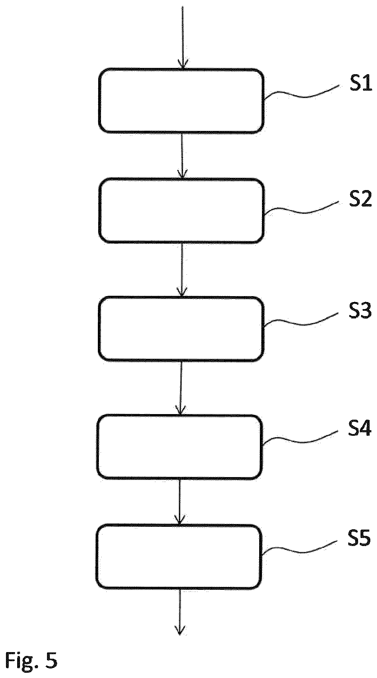

Now, with respect to e.g. figs. 3, 5 and 2, a method for guiding a subject vehicle 1 along a travelling path R according to the present invention will be described. The method comprises:
S1: obtaining recorded surface pattern information Pₚₐₜₜₑᵣₙ₁, Pₚₐₜₜₑᵣₙ₂, Pₚₐₜₜₑᵣₙ₃, Pₚₐₜₜₑᵣₙ₄, P_{patternN} associated with the travelling path R;
S2: obtaining current surface pattern information P while the subject vehicle 1 is travelling along the travelling path R;
S3: identifying matching patterns P_{match} by comparing the current surface pattern information P with the recorded surface pattern information Pₚₐₜₜₑᵣₙ₁, Pₚₐₜₜₑᵣₙ₂, Pₚₐₜₜₑᵣₙ₃, Pₚₐₜₜₑᵣₙ₄, P_{patternN};
S4: determining a translational d and/or a rotational β deviation between the current surface pattern information P and the recorded surface pattern information Pₚₐₜₜₑᵣₙ₁, Pₚₐₜₜₑᵣₙ₂, Pₚₐₜₜₑᵣₙ₃, Pₚₐₜₜₑᵣₙ₄, P_{patternN} by use of the identified matching patterns P_{match}; and
S5: guiding the subject vehicle 1 along the travelling path R by use of the determined deviation.

Guiding the subject vehicle 1 along the travelling path R may further comprise adjusting a yaw angle of the subject vehicle in response to the determined deviation. The yaw angle of the subject vehicle 1 may be adjusted in response to the determined deviation d and β and in response to a current ground engagement member angle of the subject vehicle 1, such as a current road-wheel angle of front wheels of the truck 10 as shown in fig. 1.

In the embodiment as shown in fig. 3, obtaining recorded surface pattern information Pₚₐₜₜₑᵣₙ₁, Pₚₐₜₜₑᵣₙ₂, Pₚₐₜₜₑᵣₙ₃, Pₚₐₜₜₑᵣₙ₄, P_{patternN} comprises recording surface pattern information while driving the subject vehicle 1 in a recording direction along the travelling path R, such as in a forward direction. The recorded surface pattern information is here in the form of a plurality of subsequent surface pattern images Pₚₐₜₜₑᵣₙ₁, Pₚₐₜₜₑᵣₙ₂, Pₚₐₜₜₑᵣₙ₃, Pₚₐₜₜₑᵣₙ₄, P_{patternN}. The recording direction in fig. 3 may be a direction from the right-hand side to the left-hand side in fig. 3. Fig. 3 represents a two-dimensional projection of a surface seen from above, comprising the travelling path R of the subject vehicle 1. For example, the travelling path R may be a path along a forest road or a narrow asphalt road provided in-between tall buildings where GNSS positioning data cannot be received, and/or along a road with few visual clues.

The method may further comprise defining the travelling path R by use of the recorded surface pattern information Pₚₐₜₜₑᵣₙ₁, Pₚₐₜₜₑᵣₙ₂, Pₚₐₜₜₑᵣₙ₃, Pₚₐₜₜₑᵣₙ₄, P_{patternN} **which** was recorded while driving the subject vehicle 1 in the recording direction along the travelling path R. As such, the recorded surface pattern information may comprise a plurality of subsequent surface pattern images Pₚₐₜₜₑᵣₙ₁, Pₚₐₜₜₑᵣₙ₂, Pₚₐₜₜₑᵣₙ₃, Pₚₐₜₜₑᵣₙ₄, P_{patternN}, and wherein defining the travelling path may be performed by:
identifying matching patterns which are overlapping in at least two images of the plurality of subsequent surface pattern images Pₚₐₜₜₑᵣₙ₁, Pₚₐₜₜₑᵣₙ₂, Pₚₐₜₜₑᵣₙ₃, Pₚₐₜₜₑᵣₙ₄, Pp_{atternN}; and
determining a relative translational and/or a rotational change of the at least two images by use of the identified matching patterns which are overlapping in the at least two images.

Hence, by continuously identifying matching patterns which are overlapping while driving the subject vehicle 1 in the recording direction along the travelling path R, the travelling path R can be defined. More specifically, the travelling path R may be defined by use of the general principle of the present invention as shown in fig. 2.

Further, identifying matching patterns by comparing the current surface pattern information P with the recorded surface pattern information Pₚₐₜₜₑᵣₙ₁, Pₚₐₜₜₑᵣₙ₂, Pₚₐₜₜₑᵣₙ₃, Pₚₐₜₜₑᵣₙ₄, P_{patternN} may be performed by identifying an overlapping image portion Pₒᵥₑᵣₗₐₚ of at least one surface pattern image P_{patternN} of the recorded surface pattern information and a current surface pattern image P of the current surface pattern information which may be obtained by any one of the sensors 2, 3. Also here the general principle of the present invention is used as shown in fig. 2.

With respect to fig. 4, the method may further comprise determining an articulation angle α between the at least two vehicle bodies 10, 11 by use of the determined rotational deviations β, and optionally also by the translational deviations d of each vehicle body 10, 11 of the at least two vehicle bodies 10, 11. More specifically, by using the method as disclosed herein for each vehicle body 10, 11 while travelling along the travelling path R, the articulation angle α may be determined. This angle may be an important input when reversing the articulated vehicle combination 1 as e.g. shown in fig. 1. For example, rotational deviations β of each vehicle body 10, 11 may be determined with respect to the direction of the travelling path R. Fig. 4 shows a two-dimensional view from above of an articulated vehicle combination comprising first 10 and a second 11 connected vehicle bodies, as e.g. shown in fig. 1. Each vehicle body 10, 11 has here also obtained a respective image P₃, P₄ comprising surface pattern information. For simplicity, the images P₃, P₄ are indicated by the same rectangular-shaped boxes as the vehicle bodies 10, 11. However, more likely the images P₃, P₄ are a smaller portion of each vehicle body's projection towards the surface which it is travelling on.

The method may further comprises combining the recorded surface pattern information Pₚₐₜₜₑᵣₙ₁, Pₚₐₜₜₑᵣₙ₂, Pₚₐₜₜₑᵣₙ₃, Pₚₐₜₜₑᵣₙ₄, P_{patternN} to create a surface pattern map of an area, wherein the recorded surface pattern information Pₚₐₜₜₑᵣₙ₁, Pₚₐₜₜₑᵣₙ₂, Pₚₐₜₜₑᵣₙ₃, Pₚₐₜₜₑᵣₙ₄, P_{patternN} may be recorded by more than one vehicle which has been travelling in the area. Hence, as also mentioned in the above, it may not only be the subject vehicle 1 which has obtained the recorded surface pattern information. As a consequence, the method may thereby also comprise selecting the travelling path from any one of previous travelling paths which were recorded by any one of the more than one vehicle.

The method according the present invention is preferably implemented in a control unit 100 for guiding the subject vehicle 1 along the travelling path R. The control unit 100 is adapted to communicate with e.g. the sensors 2, 3 as shown in fig 1. Further, the control unit 100 may also be configured to control any one of the lighting means 4, 5. For example, the lighting means may be controlled in response to ambient weather conditions and/or ambient light conditions, so that the sensors 2, 3 can obtain reliable sensor information of the surface pattern underneath the vehicle 1.

In addition, the control unit 100 may also be configured to communicate and receive information remotely from other data sources. As mentioned in the above, recorded surface pattern information may be provided from other vehicles which have been travelling in an area, on a road or the like. The control unit 100 may also for example be configured to communicate with a command central which provides information, such as defined travelling paths to follow to the subject vehicle 1. The command central may e.g. be a command central for controlling vehicles in a terminal area, including a logistics center, a harbour or the like. The control unit 100 may also be configured for receiving recorded surface pattern information from a cloud-based server or the like. Still further, the control unit 100 may also be configured to transmit recorded surface pattern information to other units, such as other vehicles, to the aforementioned command central and/or to the aforementioned cloud-based server.

The control unit preferably comprises a computer program comprising program code means for performing the steps of any of the embodiments of the first aspect.

It is to be understood that the present invention is not limited to the embodiments described above and illustrated in the drawings; rather, the skilled person will recognize that many changes and modifications may be made within the scope of the appended claims.

## Claims

1. A **method** for guiding a subject vehicle (1) along a travelling path (R) on a surface, comprising:
obtaining (S1) recorded surface pattern information (Pₚₐₜₜₑᵣₙ₁,..., P_{patternN}) of the surface associated with the travelling path (R), **characterized by**,
obtaining (S2) current surface pattern information (P) of the surface underneath the subject vehicle (1) while the subject vehicle (1) is travelling along the travelling path (R);
identifying (S3) matching patterns (P_{match}) by comparing the current surface pattern information (P) with the recorded surface pattern information (Pₚₐₜₜₑᵣₙ₁,..., P_{patternN});
determining (S4) a translational and/or a rotational deviation between the current surface pattern information (P) and the recorded surface pattern information (Pₚₐₜₜₑᵣₙ₁,..., P_{patternN}) by use of the identified matching patterns; and
guiding (S5) the subject vehicle (1) along the travelling path (R) by use of the determined deviation,
wherein the subject vehicle is an articulated vehicle combination comprising at least two connected vehicle bodies which are arranged to be articulated with respect to each other, wherein the method is performed for at least two of the vehicle bodies and further comprises determining an articulation angle (α) between the at least two vehicle bodies by use of the determined rotational deviations of each vehicle body of the at least two vehicle bodies.

2. The method according to claim 1, wherein obtaining recorded surface pattern information (Pₚₐₜₜₑᵣₙ₁,..., P_{pattenrnN}) comprises recording surface pattern information while driving the subject vehicle (1) in a recording direction along the travelling path (R), such as in a forward direction.

3. The method according to claim 2, further comprising defining the travelling path (R) by use of the recorded surface pattern information (Pₚₐₜₜₑᵣₙ₁,..., P_{patternN}) which was recorded while driving the subject vehicle (1) in the recording direction along the travelling path (R).

4. The method according to claim 3, wherein the recorded surface pattern information comprises a plurality of subsequent surface pattern images, and wherein defining the travelling path is performed by:
identifying matching patterns which are overlapping in at least two images of the plurality of subsequent surface pattern images (Pₚₐₜₜₑᵣₙ₁,..., P_{patternN}); and
determining a relative translational and/or a rotational change of the at least two images by use of the identified matching patterns which are overlapping in the at least two images.

5. The method according to any one of the preceding claims, wherein identifying matching patterns by comparing the current surface pattern information (P) with the recorded surface pattern information is performed by identifying an overlapping image portion (Pₒᵥₑᵣₗₐₚ) of at least one surface pattern image (P_{patternN}) of the recorded surface pattern information and a current surface pattern image (P) of the current surface pattern information (P).

6. The method according to any one of the preceding claims, wherein the method further comprises combining the recorded surface pattern information (Pₚₐₜₜₑᵣₙ₁,..., P_{patternN}) to create a surface pattern map of an area, wherein the recorded surface pattern information (Pₚₐₜₜₑᵣₙ₁,..., P_{pattenrnN}) may be recorded by more than one vehicle which has been travelling in the area.

7. A control unit for guiding a subject vehicle along a travelling path (R), wherein the subject vehicle comprises at least one sensor for monitoring surface patterns, wherein the control unit is configured to perform the method according to any one of the preceding claims.

8. A vehicle comprising at least one sensor for monitoring surface patterns, wherein the vehicle further comprises the control unit according to claim 7.

9. The vehicle according to claim 8, wherein the at least one sensor is positioned to monitor surface patterns of a surface underneath the vehicle.

10. The vehicle according to claim 9, further comprising lighting means (4) for illuminating the surface underneath the vehicle.

11. The vehicle according to any one of claims 8-10, wherein the at least one sensor is configured to monitor at least one of an asphalt pattern, a gravel pattern, a stone pattern, a height pattern, a clay pattern, a pattern created by the vehicle's own wheels, a natural ground color pattern, a color pattern such as a painted terminal pattern, or the like.

12. A computer program comprising program code means for performing the steps of any of claims 1-6, when said program is run on a computer.

13. A computer readable medium carrying a computer program comprising program code means for performing the steps of any of claims 1-6, when said program product is run on a computer.

## Patentansprüche

1. Verfahren zum Führen eines Fahrzeugs (1) entlang einer Fahrbahn (R) auf einer Oberfläche, das Folgendes umfasst:
Erhalten (S1) von gespeicherten Oberflächenmusterinformationen (Pₚₐₜₜₑᵣₙ₁, ..., P_{patternN}) der Oberfläche, die der Fahrbahn (R) zugeordnet ist, **gekennzeichnet durch**
Erhalten (S2) von aktuellen Oberflächenmusterinformationen (P) der Oberfläche unterhalb des betreffenden Fahrzeugs (1), während das betreffende Fahrzeug (1) entlang der Fahrbahn (R) fährt;
Identifizieren (S3) von passenden Mustern (P_{rnatch}), indem die aktuellen Oberflächenmusterinformationen (P) mit den gespeicherten Oberflächenmusterinformationen (Pₚₐₜₜₑᵣₙ₁, ..., P_{patternN}) verglichen werden;
Bestimmen (S4) einer Translations- und/oder Rotationsabweichung zwischen den aktuellen Oberflächenmusterinformationen (P) und den gespeicherten Oberflächenmusterinformationen (Pₚₐₜₜₑᵣₙ₁, ..., P_{patternN}) mithilfe der identifizierten passenden Muster; und
Führen (S5) des betreffenden Fahrzeugs (1) entlang der Fahrbahn (R) mithilfe der bestimmten Abweichung,
wobei das betreffende Fahrzeug eine schwenkbare Fahrzeugkombination ist, die mindestens zwei miteinander verbundene Fahrzeugkarosserien umfasst, die so angeordnet sind, dass sie in Bezug zueinander geschwenkt werden können, wobei das Verfahren für mindestens zwei der Fahrzeugkarosserien durchgeführt wird und ferner das Bestimmen eines Knickwinkels (a) zwischen den mindestens zwei Fahrzeugkarosserien mithilfe der bestimmten Rotationsabweichungen jeder Fahrzeugkarosserie der mindestens zwei Fahrzeugkarosserien umfasst.

2. Verfahren nach Anspruch 1, wobei das Erhalten von gespeicherten Oberflächenmusterinformationen (Pₚₐₜₜₑᵣₙ₁, ..., P_{patternN}) das Speichern von Oberflächenmusterinformationen während des Fahrens des betreffenden Fahrzeugs (1) entlang der Fahrbahn (R) in einer Aufnahmerichtung, wie etwa einer Vorwärtsrichtung, umfasst.

3. Verfahren nach Anspruch 2, das ferner das Definieren der Fahrbahn (R) mithilfe der gespeicherten Oberflächenmusterinformationen (Pₚₐₜₜₑᵣₙ₁, ..., P_{patternN}) umfasst, die während des Fahrens des betreffenden Fahrzeugs (1) entlang der Fahrbahn (R) in der Aufnahmerichtung gespeichert wurden.

4. Verfahren nach Anspruch 3, wobei die gespeicherten Oberflächenmusterinformationen eine Vielzahl von aufeinanderfolgenden Oberflächenmusterbildern umfassen, und wobei das Definieren der Fahrbahn durch Folgendes durchgeführt wird:
Identifizieren von passenden Mustern, die sich in mindestens zwei Bildern der Vielzahl von aufeinanderfolgenden Oberflächenmusterbildern (Pₚₐₜₜₑᵣₙ₁, ..., P_{patternN}) überlagern; und
Bestimmen einer relativen Translations- und/oder Rotationsänderung der mindestens zwei Bilder mithilfe der identifizierten passenden Muster, die sich in den mindestens zwei Bildern überlagern.

5. Verfahren nach einem der vorhergehenden Ansprüche, wobei das Identifizieren von passenden Mustern durch Vergleichen der aktuellen Oberflächenmusterinformationen (P) mit den gespeicherten Oberflächenmusterinformationen durchgeführt wird, indem ein überlagernder Bildabschnitt (Pₒᵥₑᵣₗₐₚ) mindestens eines Oberflächenmusterbilds (P_{patternN}) der gespeicherten Oberflächenmusterinformationen und ein aktuelles Oberflächenmusterbild (P) der aktuellen Oberflächenmusterinformationen (P) identifiziert werden.

6. Verfahren nach einem der vorhergehenden Ansprüche, wobei das Verfahren ferner das Kombinieren der gespeicherten Oberflächenmusterinformationen (Pₚₐₜₜₑᵣₙ₁, ..., P_{patternN}) umfasst, um eine Oberflächenmusterkarte eines Bereichs zu erstellen, wobei die gespeicherten Oberflächenmusterinformationen (Pₚₐₜₜₑᵣₙ₁, ..., P_{patternN}) von mehr als einem Fahrzeug gespeichert werden können, das in dem Bereich gefahren ist.

7. Steuereinheit zum Führen eines betreffenden Fahrzeugs entlang einer Fahrbahn (R), wobei das betreffende Fahrzeug mindestens einen Sensor zum Überwachen von Oberflächenmustern umfasst, wobei die Steuereinheit dazu konfiguriert ist, das Verfahren nach einem der vorhergehenden Ansprüche durchzuführen.

8. Fahrzeug, das mindestens einen Sensor zum Überwachen von Oberflächenmustern umfasst, wobei das Fahrzeug ferner die Steuereinheit nach Anspruch 7 umfasst.

9. Fahrzeug nach Anspruch 8, wobei der mindestens eine Sensor positioniert ist, um Oberflächenmuster einer Oberfläche unterhalb des Fahrzeugs zu überwachen.

10. Fahrzeug nach Anspruch 9, das ferner Leuchtmittel (4) zum Beleuchten der Oberfläche unterhalb des Fahrzeugs umfasst.

11. Fahrzeug nach einem der Ansprüche 8-10, wobei der mindestens eine Sensor dazu konfiguriert ist, mindestens eines von einem Asphaltmuster, einem Kiesmuster, einem Steinmuster, einem Höhenmuster, einem Lehmmuster, einem durch die eigenen Räder des Fahrzeugs erzeugten Muster, einem natürliches Farbmuster des Bodens, einem Farbmuster wie etwa ein aufgemaltes Markierungsmuster oder dergleichen zu überwachen.

12. Computerprogramm, das Programmcodemittel zum Durchführen der Schritte eines der Ansprüche 1-6 umfasst, wenn das Programm auf einem Computer ausgeführt wird.

13. Computerlesbares Medium, auf dem ein Computerprogramm gespeichert ist, das Programmcodemittel zum Durchführen der Schritte eines der Ansprüche 1-6 umfasst, wenn das Programmprodukt auf einem Computer ausgeführt wird.

## Revendications

1. Procédé de guidage d'un véhicule sujet (1) le long d'une trajectoire de déplacement (R) sur une surface, comprenant les étapes consistant à :
obtenir (S1) des informations de motif de surface enregistrées (Pₚₐₜₜₑᵣₙ₁, ... , P_{patternN}) de la surface associée à la trajectoire de déplacement (R), **caractérisé par** les étapes consistant à :
obtenir (S2) des informations de motif de surface actuel (P) de la surface se trouvant sous le véhicule concerné (1) pendant que le véhicule concerné (1) se déplace le long de la trajectoire de déplacement (R) ;
identifier (S3) des motifs correspondants (P_{match}) en comparant les informations de motif de surface actuelles (P) avec les informations de motif de surface enregistrées (Pₚₐₜₜₑᵣₙ₁,..., P_{patternN}) ;
déterminer (S4) un écart de translation et/ou de rotation entre les informations de motif de surface actuelles (P) et les informations de motif de surface enregistrées (Pₚₐₜₜₑᵣᵣₙ₁,..., P_{patternN}) à l'aide des motifs correspondants identifiés ; et
guider (S5) le véhicule concerné (1) le long de la trajectoire de déplacement (R) à l'aide de la déviation déterminée,
le véhicule sujet étant un ensemble de véhicules articulés comprenant au moins deux carrosseries de véhicules reliées qui sont agencées pour être articulées l'une par rapport à l'autre,
le procédé étant mis en œuvre pour au moins deux des carrosseries de véhicule et comprenant en outre la détermination d'un angle d'articulation (α) entre les au moins deux carrosseries de véhicules à l'aide des écarts de rotation déterminés de chaque carrosserie de véhicule des au moins deux carrosseries de véhicules.

2. Procédé selon la revendication 1, dans lequel l'obtention d'informations de motif de surface enregistrées (_{Ppattern1} ,..., P_{patternN}) comprend l'enregistrement d'informations de motif de surface tout en conduisant le véhicule sujet (1) dans une direction d'enregistrement le long du trajet de déplacement (R), comme dans en direction de l'avant.

3. Procédé selon la revendication 2, comprenant en outre la définition de la trajectoire de déplacement (R) en utilisant les informations de motif de surface enregistrées (Pₚₐₜₜₑᵣₙ₁, ..., P_{patternN}) qui ont été enregistrées pendant la conduite du véhicule sujet (1) dans la direction d'enregistrement le long du trajet de déplacement (R).

4. Procédé selon la revendication 3, dans lequel les informations de motif de surface enregistrées comprennent une pluralité d'images de motif de surface subséquentes, et la définition de la trajectoire est effectuée par :
identification de motifs correspondants qui se chevauchent dans au moins deux images de la pluralité d'images de motifs de surface subséquents (Pₚₐₜₜₑᵣₙ₁,..., P_{patternN}) ; et
détermination d'un changement relatif de translation et/ou de rotation d'au moins deux images au moyen des motifs de correspondance identifiés qui se chevauchent dans au moins deux images.

5. Procédé selon l'une quelconque des revendications précédentes, dans lequel l'identification de motifs correspondants en comparant les informations de motif de surface actuelles (P) aux informations de motif de surface enregistrées est effectuée en identifiant une section d'images en chevauchement (Pₒᵥₑᵣₗₐₚ) d'au moins une image de motif de surface (P_{patternN}) des informations de motif de surface enregistrées et d'une image de motif de surface actuelle (P) des informations de motif de surface actuelles (P).

6. Procédé selon l'une quelconque des revendications précédentes, le procédé comprenant en outre la combinaison des informations de motif de surface enregistrées (Pₚₐₜₜₑᵣₙ₁, ..., P_{patternN}) pour créer une carte de motif de surface d'une zone, les informations de motif de surface enregistrées (Pₚₐₜₜₑᵣₙ₁, ..., P_{patternN}) pouvant être enregistrées par plus d'un véhicule qui a voyagé dans la zone.

7. Unité de commande pour guider un véhicule sujet le long d'une trajectoire de déplacement (R), dans laquelle le véhicule sujet comprend au moins un capteur pour surveiller des motifs de surface, l'unité de commande étant configurée pour exécuter le procédé selon l'une quelconque des revendications précédentes.

8. Véhicule comprenant au moins un capteur pour surveiller des motifs de surface, le véhicule comprenant en outre l'unité de commande selon la revendication 7.

9. Véhicule selon la revendication 8, dans lequel l'au moins un capteur est positionné pour surveiller des motifs de surface d'une surface située sous le véhicule.

10. Véhicule selon la revendication 9, comprenant en outre un moyen d'éclairage (4) pour éclairer la surface située sous le véhicule.

11. Véhicule selon l'une quelconque des revendications 8 à 10, dans lequel l'au moins un capteur est configuré pour surveiller au moins l'un d'un motif d'asphalte, d'un motif de gravier, d'un motif de pierre, d'un motif de hauteur, d'un motif d'argile, d'un motif créé par les roues du véhicule, d'un motif de couleur naturelle du sol, d'un motif coloré tel qu'un motif de borne peint, ou similaire.

12. Programme informatique comprenant un moyen de code de programme pour exécuter les étapes selon l'une quelconque des revendications 1 à 6 lorsque ledit programme est exécuté sur un ordinateur.

13. Support lisible par ordinateur comportant un programme informatique comprenant un moyen de code de programme pour exécuter les étapes de l'une quelconque des revendications 1 à 6 lorsque ledit produit de programme est exécuté sur un ordinateur.
